(19) Europäisches Patentamt
European Patent Office
Office européen des brevets

(11) **EP 2 455 726 A1**

(12) **EUROPEAN PATENT APPLICATION**

(43) Date of publication:
**23.05.2012 Bulletin 2012/21**

(51) Int Cl.:
**G01F 3/26** (2006.01)

(21) Application number: **10425357.0**

(22) Date of filing: **22.11.2010**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Agisco S.r.l.**
**20124 Milano (IT)**

(72) Inventors:
• **Robotti, Franco**
  **20090 Segrate (MI) (IT)**
• **Celona, Roberto**
  **26025 Pandino (CR) (IT)**

(74) Representative: **Zizzari, Massimo**
**Studio Zizzari**
**P.le Roberto Ardigò, 42**
**00142 Roma (IT)**

(54) **Oscillating vessel flowmeter**

(57)    Tipping tank flowmeter (100) for liquids, comprising:
- a movable element (101), preferably shaped as a parallelepiped, having two compartments, (102) and (103), separated by a wall (104);
- supporting means, including a shaft (105) having a horizontal axis, said movable element (101) being able to rotate around it, respectively clockwise and counterclockwise, between two opposite positions: a first position, where the access side to the first compartment (102) is placed at the upper part of said parallelepiped; a second position, where the access side to the second compartment (103) is placed at the upper part of said parallelepiped; the oscillation, between the above said positions, being caused by liquid that fills the compartment, (102) or (103), the same liquid causing a displacement of the center of mass of said movable element (101), causing therefore a moment of force that pushes the movable element (101) to rotate, characterized in that further comprising some mechanical means (106) absorbing the oscillations, comprising:
- a oscillating supporting structure (107), preferably placed vertically aligned to said shaft (105), said structure (107) having at each end a branch (109) going upward, and having a geometrical shape with a casp head, so that it is suitable to convert a rotary motion to a transversal motion of the structure (107);
- a set of damping means, i.e. springs (110a), (110b), (110c), etc., that are jointed at their upper side on said oscillating supporting structure (107), and at their lower side on a fixed supporting structure (108), preferably anchored to the ground,

so that, during each oscillation of said movable element (101) between above said positions, the mechanical means (106) express a mechanical resistance, slowing down the rotary speed, and decreasing therefore the mechanical stress of structures when they impact against their end-run elements.

Fig. 1

**Description**

This invention concerns a device specifically tailored to measure a quantity of liquid, i.e. water, contained in a tank that is periodically emptied.

More specifically, the quantity of water detected is the quantity passed in a specific interval of time between a series of succeeding fillings and emptyings: the number of detected emptyings, in a interval of time, is multiplied by the inner capacity of the tank, that is known because the geometrical shape of the same tank is known.

Indeed, in order to have series of automatic fillings and emptyings, the instrument is composed of two tanks, placed side by side, and that are filled and emptied from time to time, in turn. When one tank is full, the weight of the inner liquid creates a momentum, so that the full tank is moved down and emptied, and the adjacent tank is moved up, in a position where it can receive the incoming stream of water. This system is specifically tailored to measure the waterflow in open channels, and for small flows, typically leaking flows in dams, tunnels, and generally in the order of hundreds of liters per minute, although this device can be designed for higher quantities, using tanks having bigger size and capacity.

From the prior art, such mechanical devices are well known since a very long time, like the device disclosed in patent US 101.125 of 22 march 1870, concerning a movable and oscillating tank having two compartments, each of them being progressively filled and emptied of water, in turn, in order to measure a quantity of liquid passed through.

Other US patents solve some secondary technical problems, like the automatic counting of oscillations (US 286.285), the sampling of incoming liquids in specific fixed quantities, useful i.e. for storage into bottles (US 1.571.201) or distribution as fixed quantities (US 1.593.623, US 1.798.788), or measurement of the atmospheric rains — using the so called *pluviometers* (US 2.202.452, US 3.243.999, US 3.943.762). However, in case of measurement of big quantities of water, all the above devices have the drawback that, at each oscillation, they have a significant impact of tanks against the end-run elements. That happens because the contained water has a considerable weight, in respect to the whole structure, and all these impacts on the long term could warp and damage the mechanical parts, affecting the functioning and efficiency of the entire machine.

Some attempts to solve this technical problem are known from patents US 1.815.658 and US 2.882.726, disclosing devices where the oscillations of tanks are reduced by pneumatic pistons, properly installed. However, said solutions include some additional parts that make the structures more complex, increasing their cost and requiring further maintenance.

This invention will overcome and solve all above problems, its main goal consisting in the development of a device specifically tailored to measure a quantity of liquids, i.e. water, contained in two tanks that are periodically filled and emptied, in turn, as previously described, and said device further comprising some mechanical means absorbing the oscillations, and decreasing therefore the mechanical stress of structures when they impact against their end-run elements.

Another goal of invention consists in the possibility to be designed according to different installation needs, like i.e. close to barrage structures of water basins, or channels of wastewater streams, and to be set up in order to provide a flow measurement of further liquids than water, having different chemical and physical characteristics.

Another additional goal is to disclose an adjustable balance system, properly placed so that the reversal of the entire device happens at a specific level of water into the tank, and the number of oscillations in a interval of time can be chosen as a generic design parameter.

Another further goal is to design a flow measuring system, safe and reliable, able to interface computer means for acquisition and transmission of data to a remote site.

Therefore, it is specific subject of the present invention a tipping tank flowmeter for liquids, comprising:

- a movable element, preferably shaped as a parallelepiped, having two compartments, separated by an oblique and watertight wall, said compartments being accessible from two respective adjacent sides of the same parallelepiped;
- supporting means, including a shaft having a horizontal axis passing through two opposite sides, said movable element being able to rotate around it, respectively clockwise and counterclockwise, between two opposite positions:

   ● a first position, where the access side to the first compartment is horizontal and placed at the upper part of said parallelepiped, while the adjacent access side to the second compartment is vertical and placed on a 90 degrees clockwise rotated plane, in respect to said shaft and parallel to it;
   ● a second position, where the access side to the second compartment is horizontal and placed at the upper part of said parallelepiped, while the adjacent access side to the first compartment is vertical and placed on a 90 degrees counterclockwise rotated plane, in respect to said shaft and parallel to it, the oscillation, between the above said positions, being caused by liquid that fills the compartment that is available from time to time on the top side, the same liquid causing a displacement of the center of mass of said movable element in respect to axis of said shaft, causing therefore a moment of force that pushes the movable element to rotate in direction of the compartment that is filling at the moment; at the same time, while a compartment is filling, the adjacent compartment is emptying quickly, under action of the force of gravity that makes the contained liquid to fall down outside,

characterized in that further comprising some mechanical means absorbing the oscillations, comprising:

- a oscillating supporting structure, preferably placed under said movable element, vertically aligned to said shaft and directed along a horizontal axis parallel to it; said structure having at each end a branch going upward, and having a geometrical shape with a casp head, so that it is suitable to convert a rotary motion to a transversal motion; said motion being transmitted by gear elements, having a cross-section shaped as a semicircle, jointed at each opposite side of said movable element, close to the rotary pivot of said shaft, and said motion being transmitted through said casp head of branch of the oscillating structure;
- a set of damping means, i.e. springs, that are jointed at their upper side on said oscillating supporting structure, and at their lower side on a fixed supporting structure, preferably anchored to the ground, and placed under said oscillating supporting structure, vertically aligned and directed along a horizontal axis parallel to it;

so that, during each oscillation of said movable element between above said positions, the mechanical means express a mechanical resistance, slowing down the rotary speed, and decreasing therefore the mechanical stress of structures when they impact against their end-run elements, for each oscillation of said movable element against them.

Compared to known devices, the present invention offers further advantages such as: it guarantees a high accuracy of detected data, because the mechanical stress of structure is minimized by damping means; a specific sturdiness of the entire device, because it comprises movable parts that are only of mechanical type; a possibility to design specific tanks according to installation site and type of liquid whose flow has to be measured; a modularity of the same tanks that can be assembled starting from some single basic elements; the use of standard components resulting in a cost effective, long-lasting and reliable device.

This invention is now being described for illustrative but not limitative purposes, with particular reference to figures of the enclosed drawings, where:

figure 1 is a perspective view of a tipping tank flowmeter for liquids, according to the present invention;
figure 2 is a lateral view of a particular of mechanical means for absorbing oscillations, belonging to the same tipping tank flowmeter of figure 1;
figures from 3 to 6 are a sequence of perspective views of the same tipping tank flowmeter of figure 1, during the oscillation from a first position, where the first compartment is placed at the upper part, to a second position where the second compartment is placed at the upper part;
figure 7 is a lateral schematic view of the same tipping tank flowmeter of figure 1;
figure 8 is a view of a block diagram of the electronics concerning the data acquisition of the same tipping tank flowmeter of figure 1.

It is here underlined that only few of the many conceivable embodiments of the present invention are described, which are just some specific non-limiting examples, having the possibility to describe many other embodiments based on the disclosed technical solutions of the present invention.

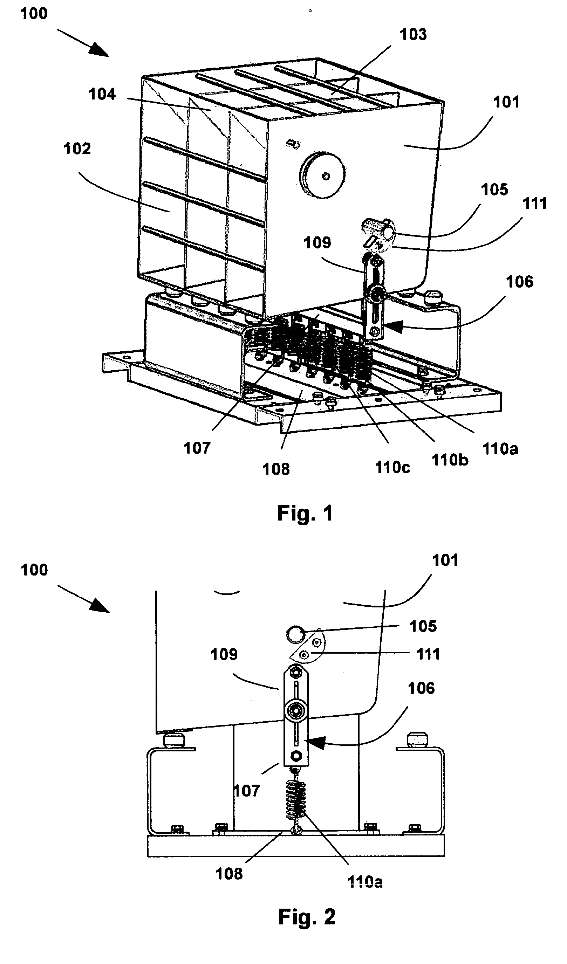

Figure 1 shows a device 100 that is a tipping tank flowmeter for liquids, i.e. water. It basically comprises a movable element 101, preferably shaped as a parallelepiped, having two compartments, 102 and 103, separated by an oblique and watertight wall. The compartments, 102 and 103, are accessible from two respective adjacent sides of the same parallelepiped.

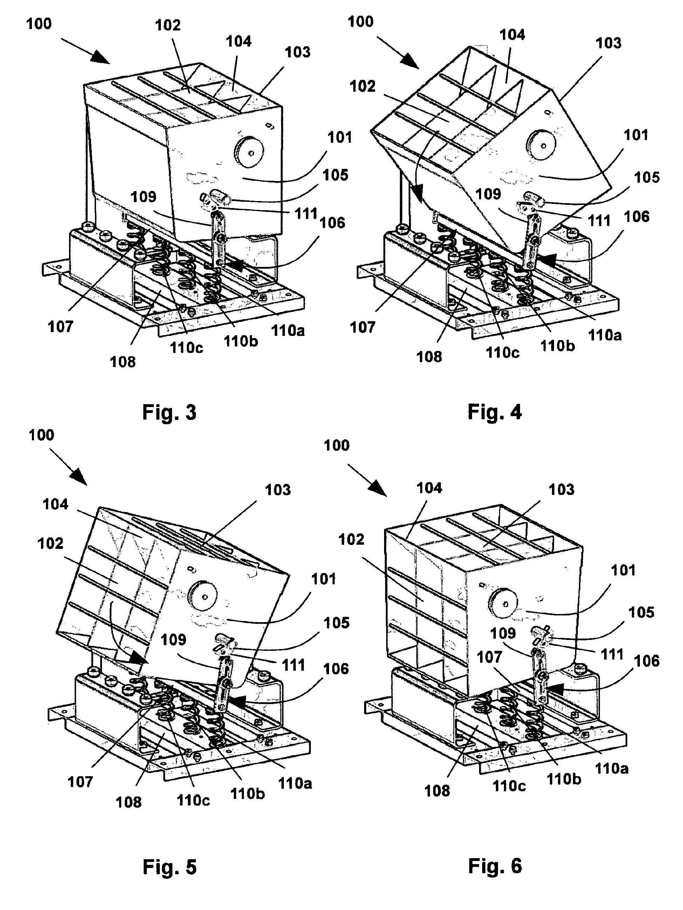

The movable element 101 is free to rotate, clockwise and counterclockwise, around a shaft 105, having a horizontal axis passing through two opposite sides. During rotations, the movable element 101 oscillates between two opposite positions: a first position (figure 3) where the access side to the first compartment 102 is horizontal and placed at the upper part of said parallelepiped, while the adjacent access side to the second compartment 103 is vertical and placed on a 90 degrees clockwise rotated plane, in respect to said shaft 105 and parallel to it; and a second position (figure 6) where the access side to the second compartment 103 is horizontal and placed at the upper part of said parallelepiped, while the adjacent access side to the first compartment 102 is vertical and placed on a 90 degrees counterclockwise rotated plane, in respect to said shaft 105 and parallel to it.

Normally, the device 100 is installed under a pipeline or a wastewater channel, so that water, whose flow has to be measured, falls down directly into the compartment, 102 or 103, that is accessible, at the time, from the upper part of the movable element 101. Thus, the incoming water fills up the compartment, 102 or 103, causing a displacement of the center of mass of said movable element 101 in respect to axis of said shaft 105, causing therefore a moment of force that pushes the movable element 101 to rotate in direction of the compartment, 102 or 103, that is filling at the moment; at the same time, while a compartment, 102 or 103, is filling, the adjacent compartment, 103 or 102, is emptying quickly, because it results to be open laterally, and therefore it permits that, under action of the force of gravity, the contained liquid falls down outside. When the moment of force reaches a specific limit of balance, suddenly the movable element 101 changes its state from a position to the opposite one, and the above filling and emptying process restarts again from the beginning, and continues for an indefinite number of cycles.

Figures from 3 to 6 show a sequence of rotation from a first position, where the first compartment 102 is placed at the upper part, to a second position where the second compartment 103 is placed at the upper part.

The innovative characteristic of the present invention consists in the fact of further comprising mechanical means 106 absorbing the oscillations, that are composed of: a oscillating supporting structure 107; a set of damping means, i.e. springs 110a, 110b, 110c, etc., and a fixed supporting structure 108. Figure 2 shows more in detail these mechanical means 106 absorbing the oscillations.

The oscillating supporting structure 107 is placed under said movable element 101, vertically aligned to said shaft 105. It includes, at each end, a branch 109 going upward, and having a geometrical shape ending with a casp head. Instead, the movable element 101 includes gear elements 111, having a cross-section shaped as a semicircle, placed at opposite sides and immediately under the pivots of said shaft 105. Therefore, the rotary motion of movable element 101 **is converted** to a transversal motion of the oscillating supporting structure 107, said motion being transmitted through contact from said elements with semicircle cross-section 111 to said casp head of branch 109 of the oscillating structure 107. The springs 110a, 110b, 110c, etc., are jointed at their upper side on said oscillating supporting structure 107, and at their lower side on a fixed supporting structure 108, preferably anchored to the ground, and placed under said oscillating supporting structure 107, vertically aligned and directed along a horizontal axis parallel to it.

During each oscillation of said movable element 101, between the above said positions, the mechanical means 106 express a mechanical resistance, slowing down the rotary speed, and decreasing therefore the mechanical stress of structures when they impact against their end-run elements.

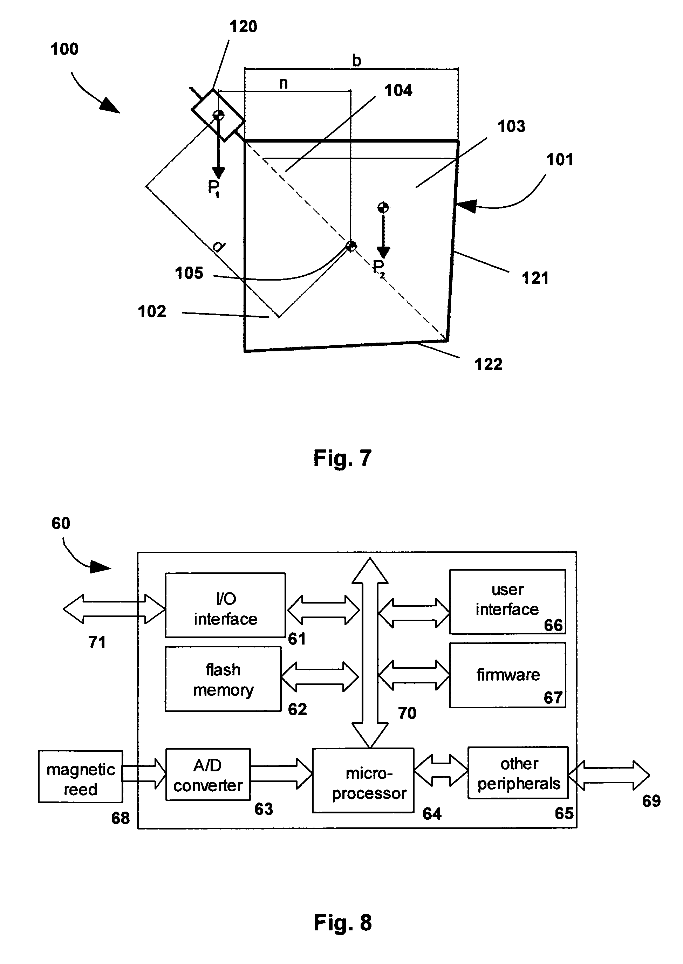

As above described, the method of measurement is based on counting the number of oscillations of movable element 101 in a specific interval of time. In figure 7 it is shown a lateral view of an example of movable element 101 having a shape as a parallelepiped. Indeed, the outer walls 121 and 122 have a smoothly angled profile, in order to make the way out of liquids easier during the phase of emptying, but in the following an exact geometry of parallelepiped will be considered, with a consequent extent of approximation in the results of calculations.

The volume of water $V_{H2O}$ contained in one of the two compartments, 102 or 103, is therefore equal to:

$$V_{H2O} = \frac{1}{2} b_{MAX}^2 s \qquad (1)$$

where b is the length of a tank cross-section, $b_{MAX}=0{,}9b$ is the maximum level of liquid contained inside, and s is the horizontal depth of the same tank. In order to define the position of a counterweight 120, so that the same tank can change its state exactly when the liquid contained inside reaches the maximum level $b_{MAX}=0{,}9b$, it is written the equation of balance of moments of forces, in respect to pivot of rotation 105, that is considered to be placed in position $b_{MAX}/2$ :

$$P_1 g n = P_2 g h \qquad (2)$$

Where $P_1$ is the weight of counterweight *120, n* is the arm of the force in respect to pivot of rotation 105, $P_2$ is the weight of contained water, g is the constant of gravity, and h is the arm of the force in respect to the same pivot of rotation 105. Considering that:

$$P_2 = V_{H2O} \rho \qquad (3)$$

where ρ is the density of liquid, and:

$$h_C = \frac{b_{MAX}}{3} \qquad (4)$$

is the position of the center of mass in a triangular cross-section, then it is obtained:

$$h = \frac{b_{MAX}}{2} - h_C = \frac{b_{MAX}}{2} - \frac{b_{MAX}}{3} = \frac{b_{MAX}}{6} \tag{5}$$

Replacing (3) and (5) in formula (2):

$$P_1 g \, n = V_{H2O} \rho \, g \, \frac{b_{MAX}}{6} \tag{6}$$

and replacing (1) it is obtained:

$$n = \frac{V_{H2O}}{P_1} \rho \frac{b_{MAX}}{6} = \frac{1}{12} b_{MAX}^3 s \frac{1}{P_1} \rho \tag{7}$$

Therefore, the distance d is given by $d = \sqrt{2}n$ .

In such a way, it is possible to define the optimal position of counterweight 120 as a function of geometrical parameters of the movable element 101 and as a function of physical characteristics of liquid whose flow has to be measured.

For example, in case of a movable element 101 having a squared cross-section of length $b=12cm$ and a horizontal depth of $s=17cm$ , that should measure a flow of water ($\rho = 1 kg/dm^3$), with a counterweight of $P_1$=0,25 $Kg$, the distance would be:

$$d = \sqrt{2} \frac{1}{12} (0,9b)^3 s \frac{1}{P_1} \rho = \sqrt{2} \frac{1}{12} [(0,9)(1,2)]^3 1,7 \frac{1}{0,25} 1 \simeq 10,1 \, cm \tag{8}$$

Therefore, the tipping flowmeter device 100 comprises some balancing means 120, so that when a specific level of liquid contained in a compartment, 102 or 103, has been reached, the weight of the same liquid expresses a moment of force that is higher than the moment of force of the balancing means 120, and then it has as a consequence a rotary motion of the movable element 101 in direction of the compartment, 102 or 103, that is filling at the moment. Said balancing means 120 are jointed to said movable element 101 by guiding cylinders, oriented in direction of said pivots of rotation 105. The same means 120 are installed at a specific distance, and are fixed by respective stops; said distance is calculated according to previous formula (8), as a function of: geometrical characteristics of the movable element 101; weight of the balancing means 120; and density of liquids whose flow has to be measured.

In case it is available an estimate of the average flow Q to be measured, it is possible to calculate the expected number of oscillations $N_{RIB}$ of movable element 101, in a specific interval of time, using formula:

$$N_{RIB} = \frac{Q}{V_{H2O}} = \frac{2Q}{b_{MAX}^2 s} \tag{9}$$

In the previous example, considering an estimate of average flow of Q=5 liters per minute, it is obtained an expected number of oscillations, equal to:

$$N_{RIB} = \frac{2Q}{b_{MAX}^2 s} = \frac{(2)(5)}{[(0,9)(1,2)]^2 (1,7)} \simeq 5 \, osc/min \tag{10}$$

Therefore, it is possible to design the mechanical system so that the movable element 101 makes a specific number of oscillations per unity of time, as a function of an estimate of average flow. In fact, the same formula (9) can be written again in the form:

$$s = \frac{2Q}{b_{MAX}^2 \, N_{RIB}} \qquad\qquad (11)$$

Then, for a number of oscillations equal to *2 osc/min,* the horizontal depth s would result to be:

$$s = \frac{2Q}{(0,9\,b)^2 \, N_{RIB}} = \frac{(2)(5)}{[(0,9)(1,2)]^2 (2)} \simeq 43\,cm \qquad\qquad (12)$$

In such a way, the geometrical parameters of the movable element 101, like i.e. height, width and depth, can be calculated as a function of the expected number of oscillations per unity of time, that is in turn a function of the estimated liquid flow on site. Thus, the number of above said impacts of movable element 101 against the end-run elements, per unity of time, can be estimated and then minimized as a generic design parameter.

With reference to detection of the oscillations of movable element 101, proper means are included, preferably comprising a permanent magnet, placed on the outer surface of the same movable element 101, not aligned to said pivots of rotation 105, and a sensor consisting in a *magnetic reed,* placed on the fixed supporting structure 108, anchored to the ground.

For each oscillation, the permanent magnet passes close to the *magnetic reed,* and the magnetic field causes a short circuit in an electrically power supplied circuit. In such a way, the oscillation is detected as a *on/off* transition of an electrical signal. Figure 8 shows a block diagram of an example of control electronics 60, embedding functions of data acquisition of measures, storage and eventual transmission to a remote site. It comprises: acquisition means 68 of electric signals coming from said electric circuit, encoding means 63 of data in digital format, computing means 64 and general counting of the same data; storage means 62 of data in a data base; transmission means 61 of data to a remote control unit.

Therefore, the same control electronics 60, embeds a complete method of: acquisition of electric signals coming from said electric circuit; encoding data in digital format; computing and general counting of the same data; storage of data in a data base; and transmission of data to a remote control unit.

Considering that all the mechanical parts of device 100 are continuously, in contact with liquids, whose flow has to be measured, as a consequence in case of measurements of water, the materials preferably used are composed of stainless steel AISI 304/316.

After description of above examples there is evidence to say that this invention achieves all its goals and, in particular, a device specifically tailored to measure a quantity of liquids, i.e. water, contained in two tanks that are periodically filled and emptied, in turn, and said device further comprising some mechanical means absorbing the oscillations, and decreasing therefore the mechanical stress of structures when they impact against their end-run elements.

Another achievement of invention consists in the possibility to be designed according to different installation needs, like i.e. close to barrage structures of water basins, or channels of wastewater streams, and to be set up in order to provide a flow measurement of further liquids than water, having different chemical and physical characteristics.

Furthermore, the invention comprises an adjustable balance system, properly placed so that the reversal of the entire device happens at a specific level of water into the tank, and the number of oscillations in a interval of time can be chosen as a generic design parameter.

Another further achievement is that invention comprises a flow measuring system, safe and reliable, able to interface computer means for acquisition and transmission of data to a remote site.

This invention is described for illustrative but not limitative purposes, following some preferred achievements; however it goes without saying that modifications and/or changes would be introduced without departing from the relevant scope, as defined in the enclosed claims.

**Claims**

1.  Tipping tank flowmeter (100) for liquids, comprising:

- a movable element (101), preferably shaped as a parallelepiped, having two compartments, (102) and (103), separated by an oblique and watertight wall (104), said compartments, (102) and (103), being accessible from two respective adjacent sides of the same parallelepiped;
- supporting means, including a shaft (105) having a horizontal axis passing through two opposite sides, said movable element (101) being able to rotate around it, respectively clockwise and counterclockwise, between two opposite positions:

● a first position, where the access side to the first compartment (102) is horizontal and placed at the upper part of said parallelepiped, while the adjacent access side to the second compartment (103) is vertical and placed on a 90 degrees clockwise rotated plane, in respect to said shaft (105) and parallel to it;

● a second position, where the access side to the second compartment (103) is horizontal and placed at the upper part of said parallelepiped, while the adjacent access side to the first compartment (102) is vertical and placed on a 90 degrees counterclockwise rotated plane, in respect to said shaft (105) and parallel to it,

the oscillation, between the above said positions, being caused by liquid that fills the compartment, (102) or (103), that is available from time to time on the top side, the same liquid causing a displacement of the center of mass of said movable element (101) in respect to axis of said shaft (105), causing therefore a moment of force that pushes the movable element (101) to rotate in direction of the compartment, (102) or (103), that is filling at the moment; at the same time, while a compartment, (102) or (103), is filling, the adjacent compartment, (103) or (102), is emptying quickly, under action of the force of gravity that makes the contained liquid to fall down outside,

**characterized in that** further comprising some mechanical means (106) absorbing the oscillations, comprising:

- a oscillating supporting structure (107), preferably placed under said movable element (101), vertically aligned to said shaft (105) and directed along a horizontal axis parallel to it; said structure (107) having at each end a branch (109) going upward, and having a geometrical shape with a casp head, so that it is suitable to convert a rotary motion to a transversal motion; said motion being transmitted by gear elements (111), having a cross-section shaped as a semicircle, jointed at each opposite side of said movable element (101), close to the rotary pivot of said shaft (105), and said motion being transmitted through said casp head of branch (109) of the oscillating structure (107);
- a set of damping means, i.e. springs (110a), (110b), (110c), etc., that are jointed at their upper side on said oscillating supporting structure (107), and at their lower side on a fixed supporting structure (108), preferably anchored to the ground, and placed under said oscillating supporting structure (107), vertically aligned and directed along a horizontal axis parallel to it;

so that, during each oscillation of said movable element (101) between above said positions, the mechanical means (106) express a mechanical resistance, slowing down the rotary speed, and decreasing therefore the mechanical stress of structures when they impact against their end-run elements, for each oscillation and impact of said movable element (101) against them.

2. Tipping tank flowmeter (100) for liquids, according to claim 1, **characterized in that** further comprising:

- balancing means (120), jointed to said movable element (101) by guiding cylinders, oriented in direction of pivots of rotation of shaft (105); said means (120) being installed at a specific distance, and fixed by respective stops; said distance being calculated as a function of: geometrical characteristics of the movable element (101); weight of the balancing means (120); and density of liquids whose flow has to be measured,

so that when a specific level of liquid contained in a compartment, (102) or (103), has been reached, the weight of the same liquid express a moment of force that is higher than the moment of force of the balancing means (120), and this results in a rotary motion of the movable element (101) in direction of the compartment, (102) or (103), that is filling at the moment.

3. Tipping tank flowmeter (100) for liquids, according to claim 2, **characterized in that** distance d of said balancing means (120) is calculated according to the formula:

$$d = \sqrt{2}\,\frac{1}{12}(0,9\,b)^3\,s\,\frac{1}{P_1}\,\rho$$

where b is the length of the squared cross-section of the movable element (101), s is its horizontal depth, $P_1$ is the weight of the balancing means (120) and $\rho$ is the density of liquid.

4.  Tipping tank flowmeter (100) for liquids, according to one or more of previous claims, **characterized in that**:

    - the geometrical parameters of the movable element (101), like i.e. height, width and depth, can be calculated as a function of the expected number of oscillations per unity of time, that is in turn a function of the estimated liquid flow on site,
    so that, the number of above said impacts of movable element (101) against the end-run elements, per unity of time, can be estimated and then minimized as a generic design parameter.

5.  Tipping tank flowmeter (100) for liquids, according to claim 4, **characterized in that** horizontal depth s of said movable element (101) is calculated according to the formula:

$$s = \frac{2Q}{(0,9\,b)^2\,N_{RIB}}$$

where b is the length of squared cross-section of the movable element (101), $N_{RIB}$ is a specific expected number of oscillations per unity of time, and Q is the estimated liquid flow on site.

6.  Tipping tank flowmeter (100) for liquids, according to one or more of previous claims, **characterized in that** further comprising:

    - means for oscillations detection of movable element (101), comprising a permanent magnet, placed on the outer surface of the same movable element (101), not aligned to said pivots of rotation of shaft (105); and a sensor consisting in a *magnetic reed,* placed on the fixed supporting structure (108), anchored to the ground.

    so that, for each oscillation, the permanent magnet passes close to the *magnetic reed,* and the magnetic field causes a short circuit in an electrically power supplied circuit; in such a way, the oscillation is detected as a *on/off* transition of an electrical signal.

7.  Tipping tank flowmeter (100) for liquids, according to previous claim, **characterized in that** further comprising:

    - control electronics (60), comprising: acquisition means (68) of electric signals coming from said electric circuit, encoding means (63) of data in digital format, computing means (64) and general counting of the same data; storage means (62) of data in a data base; transmission means (61) of data to a remote control unit,
    so that the control electronics (60) embeds a complete method of:
    - acquisition of electric signals coming from said electric circuit; encoding data in digital format; computing and general counting of the same data; storage of data in a data base; and transmission of data to a remote control unit.

8.  Tipping tank flowmeter (100) for liquids, according to one or more of previous claims, **characterized in that** said liquids, whose flow has to be measured, consist in water.

9.  Tipping tank flowmeter (100) for liquids, according to one or more of previous claims, **characterized in that** the materials preferably used for mechanical components are composed of stainless steel *AISI 304/316.*

**100**

**103**

**104**

**102**

**101**

**105**

**111**

**109**

**106**

**107**

**108**

**110c**

**110b**

**110a**

## Fig. 1

**100**

**101**

**105**

**111**

**109**

**106**

**107**

**108**

**110a**

## Fig. 2

**Fig. 3**

**Fig. 4**

**Fig. 5**

**Fig. 6**

**Fig. 7**

**Fig. 8**

Europäisches
Patentamt

European
Patent Office

Office européen
des brevets

## EUROPEAN SEARCH REPORT

Application Number

EP 10 42 5357

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A,D | US 2 882 726 A (SMITH HORACE V) 21 April 1959 (1959-04-21) * column 2, line 31 - column 6, line 24; figures 1-7 * ----- | 1-9 | INV. G01F3/26 |
| A | US 3 194 437 A (TOELKE LESTER W) 13 July 1965 (1965-07-13) * column 3, line 28 - line 60; figures 2,3 * ----- | 1-9 | |
| A | FR 359 857 A (LOUIS BEDOUT [FR]) 6 April 1906 (1906-04-06) * page 2, line 12 - line 30; figure 1 * ----- | 1-9 | |
| A | US 5 016 569 A (MOSKVIN GENNADY A [SU]) 21 May 1991 (1991-05-21) * column 8, line 30 - line 53; figures 3,4 * ----- | 1-9 | |
| A,D | US 3 943 762 A (BAER JOHN) 16 March 1976 (1976-03-16) * column 1, line 67 - column 4, line 52; figures 1-5 * ----- | 1-9 | TECHNICAL FIELDS SEARCHED (IPC) G01F |

The present search report has been drawn up for all claims

| Place of search | Date of completion of the search | Examiner |
|---|---|---|
| The Hague | 31 May 2011 | Rambaud, Dilek |

## ANNEX TO THE EUROPEAN SEARCH REPORT
## ON EUROPEAN PATENT APPLICATION NO.

EP 10 42 5357

This annex lists the patent family members relating to the patent documents cited in the above-mentioned European search report.
The members are as contained in the European Patent Office EDP file on
The European Patent Office is in no way liable for these particulars which are merely given for the purpose of information.

31-05-2011

| Patent document cited in search report | | Publication date | Patent family member(s) | | Publication date |
|---|---|---|---|---|---|
| US 2882726 | A | 21-04-1959 | NONE | | |
| US 3194437 | A | 13-07-1965 | NONE | | |
| FR 359857 | A | 06-04-1906 | NONE | | |
| US 5016569 | A | 21-05-1991 | BG | 60042 A3 | 16-08-1993 |
| | | | DE | 58906447 D1 | 27-01-1994 |
| | | | EP | 0381762 A1 | 16-08-1990 |
| | | | HU | 51441 A2 | 28-05-1990 |
| | | | NZ | 228983 A | 25-02-1992 |
| | | | SU | 1720600 A1 | 23-03-1992 |
| | | | WO | 8910686 A1 | 16-11-1989 |
| | | | YU | 91889 A | 30-06-1991 |
| US 3943762 | A | 16-03-1976 | NONE | | |

EPO FORM P0459

For more details about this annex : see Official Journal of the European Patent Office, No. 12/82

**EP 2 455 726 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 101125 A
- US 286285 A
- US 1571201 A
- US 1593623 A
- US 1798788 A
- US 2202452 A
- US 3243999 A
- US 3943762 A
- US 1815658 A
- US 2882726 A